# EUROPEAN PATENT SPECIFICATION

(11) **EP 1 220 778 B1**
(45) Date of publication and mention of the grant of the patent: **17.12.2003**
(21) Application number: 00966141.4
(22) Date of filing: 09.10.2000
(51) Int. Cl.: B65B 1/00

(54) **APPARATUS AND METHOD FOR PACKAGING PRODUCTS IN BLOW-THERMOFORMED PLASTIC CONTAINERS**
VORRICHTUNG UND VERFAHREN ZUM VERPACKEN VON PRODUKTEN IN ÜBERDRUCKARMGEFORMTEN PLASTIKBEHÄLTERN
DISPOSITIF ET PROCEDE SERVANT A EMBALLER DES PRODUITS DANS DES RECIPIENTS EN PLASTIQUE THERMOFORMES PAR SOUFFLAGE

(30) Priority: 07.10.1999 IT MO990212
(43) Date of publication of application: 10.07.2002
(73) Proprietor: ELOPAK SYSTEMS AG, 8152 Glattbrugg (CH)
(72) Inventor: BIANCHINI, Alessandro, I-41010 Cognento (IT); DI GRANDE, Sal, Lutz, FL 33549 (US)
(74) Representative: Provvisionato, Paolo
(86) International application number: EP0009898
(87) International publication number: WO01025089

(56) References cited:
- DE-A- 1 604 711
- DE-A- 3 141 069
- DE-B- 1 133 114
- DE-B- 1 181 895
- DE-B- 1 191 549
- US-A- 3 907 480

## Description

The invention relates to an apparatus and a method as described in the preambles of claims 1, 17.

EP-A-0692364 discloses a thermoforming machine wherein a pair of sheet material portions is caused to pass through a pre-heating station to raise the temperature of the sheet material, making it approach the softening temperature, a sealing station, wherein the portions are sealed through a sealing mould in regions substantially defining the outlines of containers to be formed so as to obtain pockets from said portions, a forming station, wherein a pressurized forming fluid is injected into the pockets to make the pockets expand into a forming mould so as to obtain formed containers from the pockets, the containers being still joined along the outlines by parts of non-formed sheet material.

The sheet material is indexed through the above-mentioned stations leaving lateral edges accessible for allowing the pressurized forming fluid to enter therethrough.

In such machines it is sometimes a problem to move the sheet material, because the material, when it is heated to temperatures near to the softening temperature, tends to become sticky and less resistant.

Furthermore, there may be a disadvantage consisting in that the containers can be contaminated by extraneous material through the openings used for introducing the forming fluid, mainly because the openings are generally turned upwards.

In EP-A-0692364 the forming fluid is injected through an injector body, on which the portions of the sheet material are pressed by portions of the forming mould and scrape the outer surfaces of the injectors when the sheet material is indexed at the end of each forming cycle. This fact causes possible damages of the sheet material.

EP-A-0479152 describes a blow-forming machine for sheet material, wherein the injectors of the forming fluid are arranged in the forming station and are movable perpendicularly to the advancing direction of the sheet material, between an outer non-operating position and an inner operating position in which they are introduced between edge regions of the sheet material and penetrate into the forming mould to form filling ducts for the product into the formed containers. The movable injectors of EP-A-0479152 are difficult to be positioned between the portions of the sheet material and so divaricating means is provided in order to divaricate the edges of the sheet material and to facilitate the insertion of the injectors.

DE-1191549 describes a blow forming machine provided with a wedge-shaped support for a plastic sheet disposed upstream of a heating station. Inside the heating station, the sheet is supported firstly by a steel spiral conveyor, and then by a flow of air blown by a blowing device. DE-1181895 discloses a blow forming machine provided with a heating station with a wedge-shaped support for a plastic sheet which is to be heated.

It is an object of the invention to improve the known blow-thermoforming systems.

Another object is to improve the conveying conditions of the sheet material in blow-thermoforming machines.

A further object is to improve the hygienic conditions of the formed containers.

A still further object is to improve the introduction of the forming fluid between the portions of the sheet material to be formed.

In a first aspect of the invention, there is provided an apparatus as described in claim 1.

In a second aspect of the invention, there is provided a method as described in claim 17.

Owning to the invention, it is possible to improve the conveying of sheet material in a blow-thermoforming machine, since the sheet material substantially does not come in contact with machine parts which can brake or damage it, or to which the sheet material can adhere.

Furthermore, the containers can be formed with their closed bottom turned upwards and the neck opening turned downward, which prevents polluting means from entering into the container.

Owing to these aspects of the invention, it is considerably easier to insert the injector means between the portions of the sheet material, since the injector means can be inserted between the portions in the sealing station before sealing the strips.

The invention could be better understood and carried out with reference to the attached drawing, which shows a non-limitative example thereof, wherein:
Figure 1 is a schematic plan view of a machine for forming containers from sheet material comprising a sheet material pre-heating station, a sheet material sealing station, a container forming station;
Figure 2 is a schematic plan view of the pre-heating station;
Figure 3 is a broken and enlarged section taken along the plane III-III of Figure 2;
Figure 4 is a section taken along the plane IV-IV of Figure 2;
Figure 5 is a broken and enlarged section taken along the plane V-V of Figure 3;
Figure 6 is a schematic plan view of the sheet material sealing stations and container forming station;
Figure 7 is a deviated section taken along the plane VII-VII of Figure 6;
Figure 8 is a deviated section taken along the plane VIII-VIII of Figure 6;

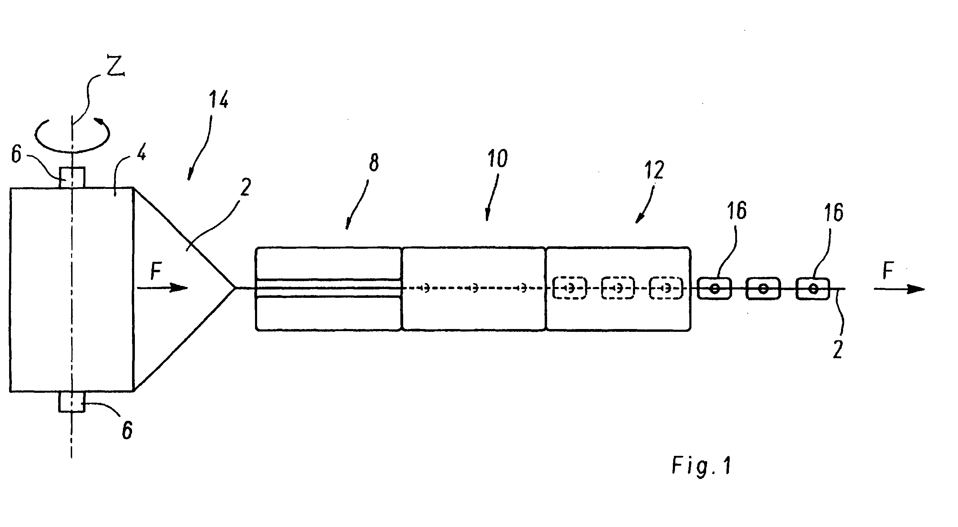

As shown in Figure 1, sheet material 2 is unwound from a reel 4 supported on a shaft 6 around a horizontal axis Z and, after being folded by folding means 14 to form a pair of opposed facing portions, the sheet material 2 is indexed along a direction F through a pre-heating station 8, a sealing station 10 and e forming station 12.

In the pre-heating station 8 the sheet material 2 is heated to a temperature near to the softening temperature, in the sealing station 10 the portions of the sheet material 2 are sealed in regions defining the outlines of the containers to be formed so as to obtain pockets open downwards, and in the forming station 12 the pockets are expanded to obtain containers 16 joined together by substantially undeformed regions of the sheet material 2.

Therefore, at the exit of the forming station 12, the formed containers 16 are connected to each other by undeformed regions of the portions of the sheet material 2 and are arranged with the respective openings turned downwards. Consequently it is rather unlikely that polluting material could be able to enter into the containers 16.

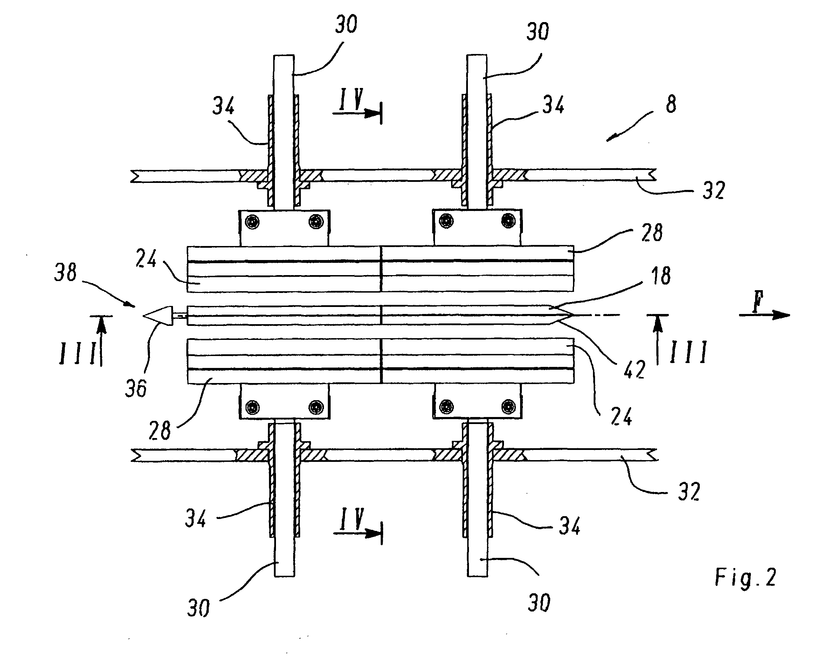

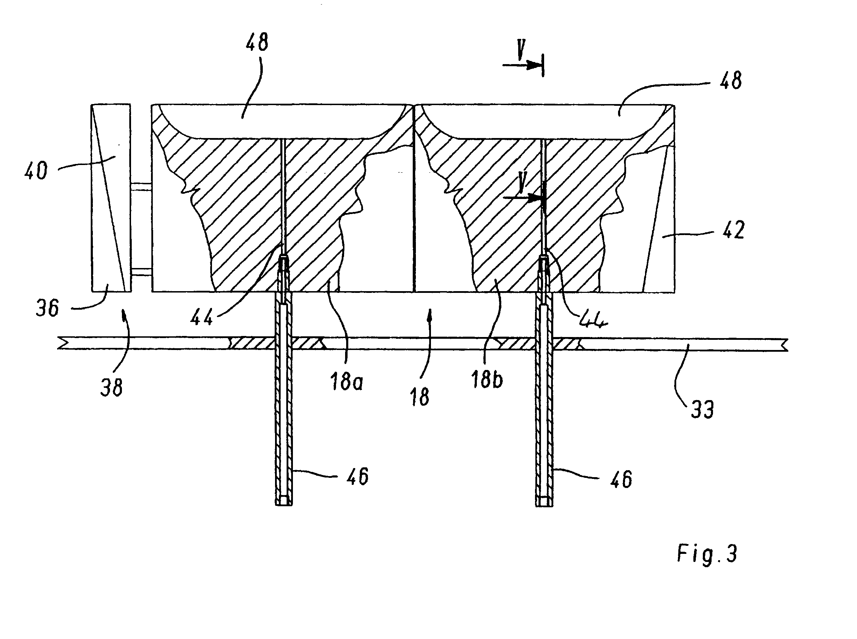

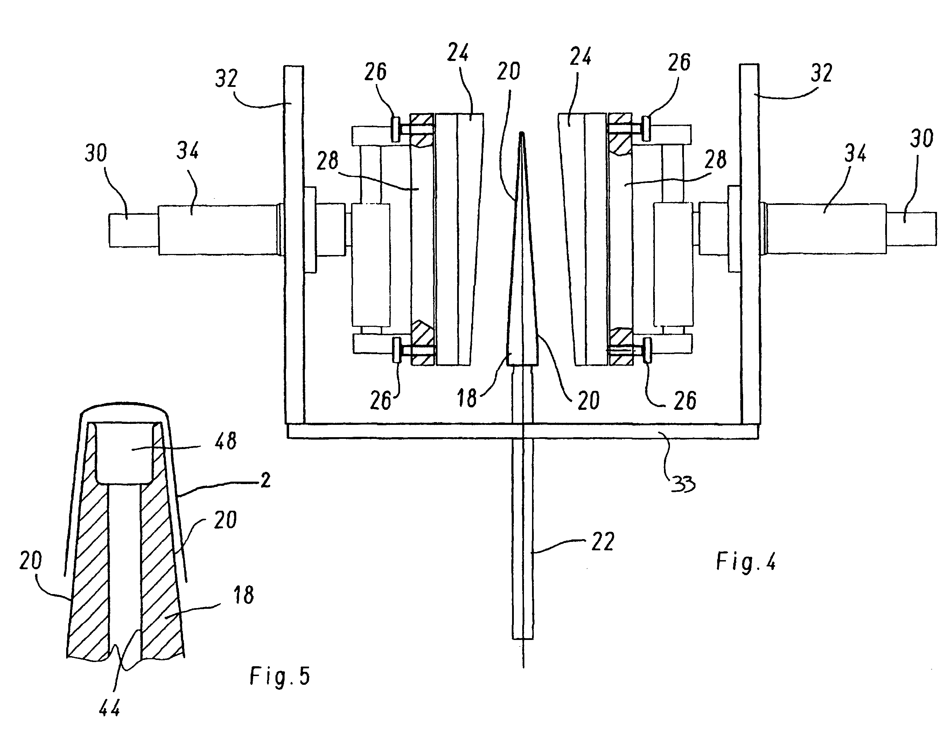

As shown in Figures 2, 3, 4 and 5, the pre-heating station 8 comprises a supporting element 18 having inclined lateral walls 20 diverging downwards, said supporting element being fixed at the bottom to positioning means 22. On a side of each wall 20 a pre-heating plate 24 is provided, said pre-heating plate being supported by a fixing plate 28 by means of adjusting screws 26.

Each fixing plate 28 is connected to a respective pair of positioning rods 30 connected to a side wall 32 through bushings 34. The side walls 32 project upwards from a bottom wall 33. The positioning rods 30 can be axially adjusted at the inside of the bushings 34 so as to allow the pre-heating plates 24 to be approached to or moved away from the supporting element 18 to vary the amount of heat transmitted to the sheet material 2.

The end of the supporting element 18 turned towards the reel 4 is provided with a wedge-shaped element 38 having first sides 36 converging towards the reel 4 and second sides 40 diverging downwards like the walls 20.

The end of the supporting element 18 facing away from the reel 4 is provided with further sides 42 diverging towards the reel 4.

The supporting element 18 is divided into two consecutive parts 18a, 18b each of which is internally provided with a conduit 44 into which a supporting fluid for the sheet material is introduced, for example pressurized air, through a respective tube 46. The end of each conduit 44 opposite to the tube 46 opens into a cavity 48, open upwards at the upper edge region of the supporting element 18. When the sheet material 2 is placed astride the support element 18, the cavity 48 defines a closed space, in which the supporting fluid accumulates, said supporting fluid creating an air-cushion which supports the sheet material 2 preventing it from contacting the walls 20 and from scraping. Therefore the sheet material 2 floats with a very low friction on air-cushion interposed between the sheet material 2 and the walls 20.

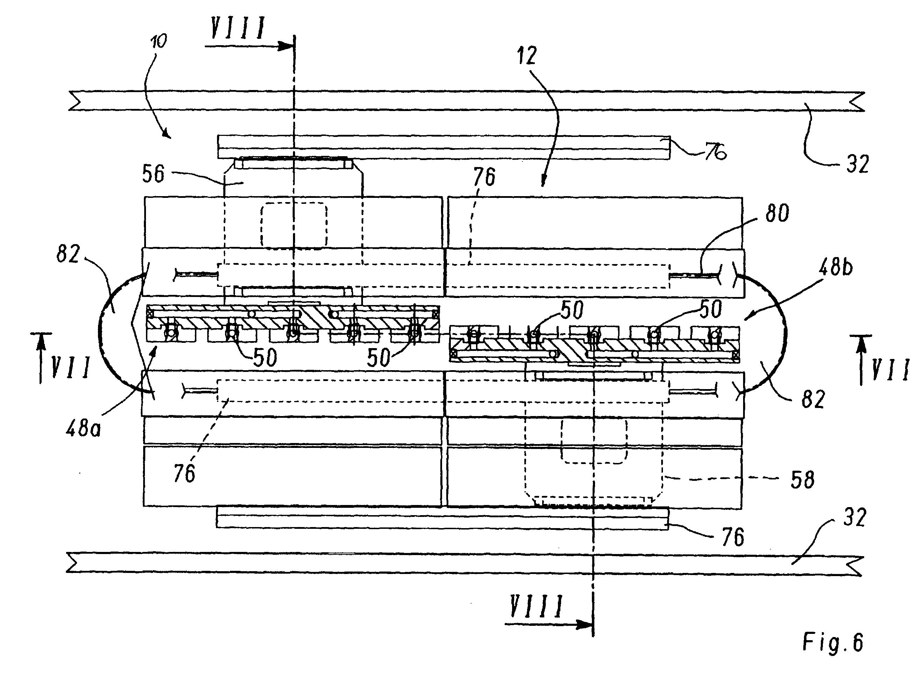

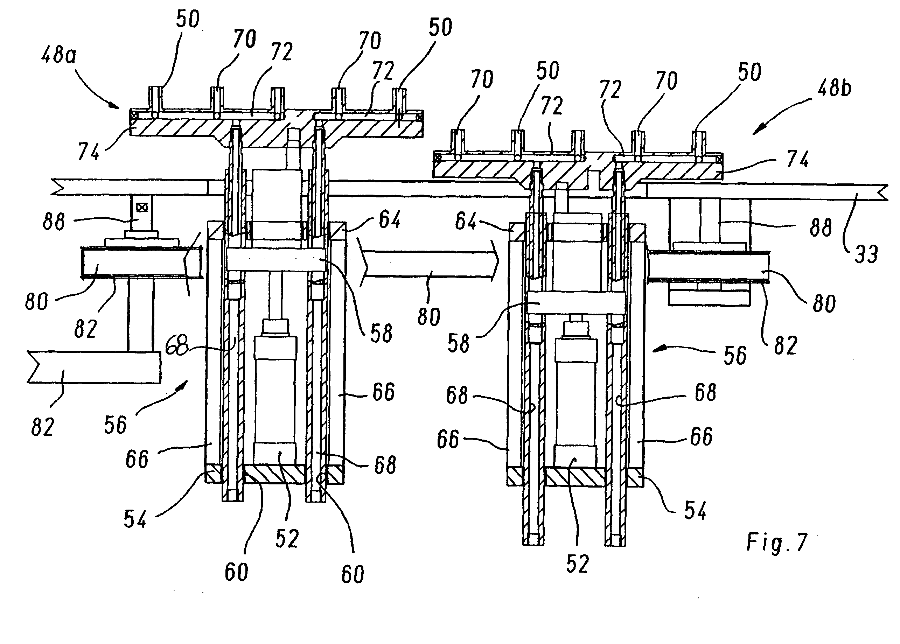

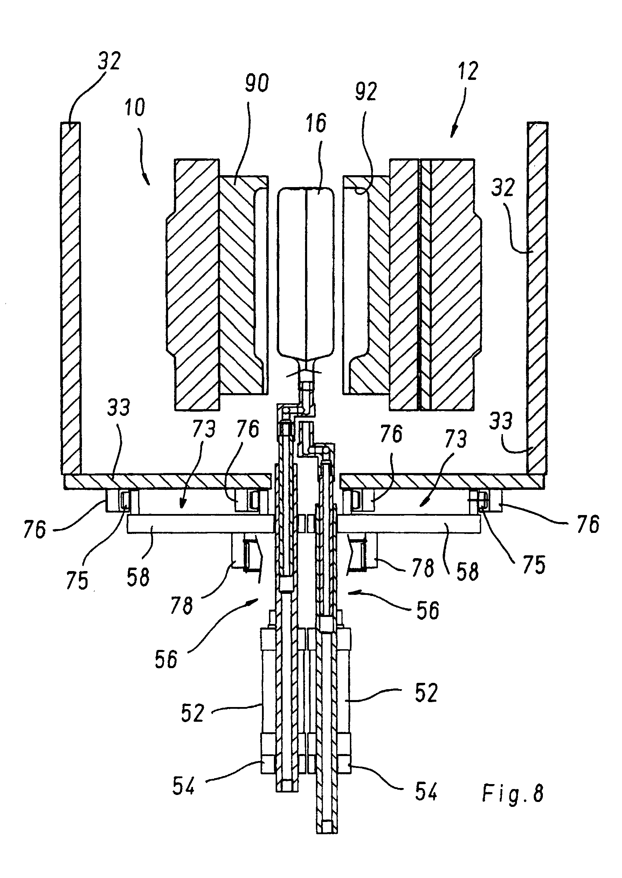

With reference now to Figures 6, 7 and 8, the sealing station 10 and the forming station 12 are shown, said stations comprising a first group 48a and a second group 48b of injector nozzles for injecting a forming fluid, for example pressurized air.

The nozzle groups 48a, 48b comprise nozzles 50 arranged in a longitudinal plane passing through the middle plane of the support element 18 and aligned thereto.

The groups 48a, 48b of nozzles 50 are coupled to vertical positioning means 52, for example pneumatic cylinders, which lift and lower them to move each group from an outer position, in which each group does not interfere with the portions of the sheet material 2, to a position between said portions. Each of the pneumatic cylinders 52 is placed between a first end cross-bar 54 of a respective movable frame 56 and a middle cross-bar 58 of the same movable frame 56. The middle cross-bar 58 of each movable frame 56 is connected to driving rods 62 engaged in vertical driving means comprising bushings 60 inserted in the first end cross-bar 54 and in a second end cross-bar 64 of the movable frame 56 connected to the first cross-bar 54 by posts 66.

Therefore the middle cross-bars 58 may slide vertically driven by the vertical actuating means 52.

The driving rods 60 of each movable frame 56 are internally provided with holes 68 which communicate with further holes 70 of the nozzles 50 through collectors 72 of a body 74 of each group 48a, 48b of nozzles 50.

Each second cross-bar 58 is provided with coupling means 73, comprising wheels 75 slidably engaged on tracks 76 defining longitudinal driving means arranged parallel to the direction F and integral with the bottom wall 33.

The second cross-bars 58 are further connected, by means of respective appendices 78, to opposing lengths of a belt 80 wound on pulleys 82, one of which is coupled to rotating driving means 84, supported by respective vertical shafts 88. Therefore, by actuating the pulley 80, the first group of nozzles 48a may be moved from the sealing station 10 to the forming station 12 while the second group of nozzles 48b is moved from the forming station 12 to the sealing station 10, and vice-versa.

A forming cycle is carried out in the following way: dragging means, not shown, indexes the sheet material 2 from the pre-heating station 8 to the sealing station 10, in which the first nozzles group 48a is in a lifted position; then, the sealing mould 90 is closed and air is injected into the pockets to be formed through the nozzles 50 of the first group of nozzles 48a, so as to prevent wall regions of the pockets from sticking to each other; then the sealing mould 90 is opened and the dragging means further indexes the sheet material with the formed pockets up to the forming station 12, the nozzles 50 of the second nozzles group 48b, which were in the forming station 12, are brought to the sealing station 10, said nozzles 50 of the second group of nozzles 48b being in their lowered position, the nozzles 50 of the first nozzles group 48a still inserted into the respective pockets follow the sheet material 2 up to the forming station 12; in the forming station 12 a forming mould 92 is closed and air is injected into the formed pockets to expand the pockets so as to form the containers 16. Such step takes place while the nozzles 50 of the second group 48b of nozzles have been lifted and positioned between the preheated portions of sheet material 2. The nozzles 50 of the first group of nozzles 48a are then lowered, in order to be able to return again into the sealing station 10 and start a new cycle, while the formed containers 16 are sent to the subsequent working step.

## Claims

1. Apparatus, comprising heating means (8) for heating a thermoformable sheet material (2), forming means (12) for forming containers (16) from said sheet material (2), said heating means (8) comprising wedge-shaped supporting means (18) for supporting said sheet material (2) **characterized in that**, said wedge-shaped supporting means (18) is provided with conduit means (44) so arranged as to direct a supporting fluid towards said sheet material (2).

2. Apparatus according to claim 1, wherein said wedge-shaped supporting means (18) comprises lateral walls (20) diverging downwards.

3. Apparatus according to claim 1, wherein said conduit means (44) open into a cavity (48) open towards said sheet material (2).

4. Apparatus according to any one of the preceding claims, wherein said wedge-shaped supporting means (18) is provided, at at least one of its ends, with end walls (36, 42) converging outwardly.

5. Apparatus according to any one of the preceding claims, wherein said wedge-shaped supporting means (18) is disposed along an advancing direction (F) of the sheet material (2).

6. Apparatus according to any one of the preceding claims, wherein said wedge-shaped supporting means (18) is provided at a heating station (8) of said sheet material (2).

7. Apparatus according to claim 6, wherein said heating station (8) comprises a pair of heating plates (24) facing said wedge-shaped supporting means (18).

8. Apparatus according to claim 7, wherein said heating plates (24) are movable by driving means (30, 34) by which said heating plates (24) are positioned at a predetermined distance from said wedge-shaped supporting means (18)

9. Apparatus according to claim 6, or 7, or 8, and further comprising, a sealing station (10) downstream of said heating station (8), said sealing station (10) comprising sealing means (90) for sealing portions of said sheet material (2) along outlines of containers to be formed, leaving in each outline an opening formed by a non-sealed region of said sheet material (2).

10. Apparatus according to any one of claims 6 to 9, and further comprising a forming station (12) downstream of said sealing station (10).

11. Apparatus according to claims 9 and 10, wherein first nozzle means (48a, 50) and second nozzle means (48b, 50) are provided at said sealing station (10) and said forming station (12), said nozzle means (48a, 50; 48b, 50) being movable from said sealing station (10) to said forming station (12), and vice-versa.

12. Apparatus according to claim 11, wherein said nozzle means (50) is provided with injection means (68, 72, 72) for injecting a forming fluid between said portions of sheet material (2).

13. Apparatus according to claim 11, or 12, wherein said first nozzle means (48a, 50) and said second nozzle means (48b, 50) are associated with longitudinally moving means (56, 80) extending along said advancing direction (F).

14. Apparatus according to claim 13, wherein said longitudinal moving means (56, 80) comprises opposing lengths of belt means (80).

15. Apparatus according to any one of claims 11 to 14, wherein said first nozzle means (48a, 50) and said second nozzle means (48b, 50) are associated with transversal moving means (52) extending transversely of said advancing direction (F).

16. Apparatus according to claim 15, as appended to claim 13, or 14, wherein said transversal moving means (52) is placed on movable frames (56) which are part of said longitudinal moving means (56, 80).

17. Method, comprising heating a thermoformable sheet material (2), forming containers from said sheet material after heating said sheet material, wherein, during said heating, there is provided supporting said sheet material (2) on wedge-shaped supporting means (18), **characterized in that** said supporting comprises injecting supporting fluid means through conduit means (44) provided in said wedge shaped supporting means opening towards said sheet material (2).

18. Method according to claim 17, wherein said supporting comprises arranging portions of said sheet material (2) along walls (20) of said wedge shaped supporting means (18).

19. Method according to claim 18 wherein, during said supporting, there is provided advancing said sheet material (2) along an advancing direction (F) to a forming station (12) for forming containers (16) from said sheet material (2) by injecting said forming fluid means between said portions (2).

20. Method according to any one of claims 17 to 19, wherein said supporting occurs at a heating station (8) of said sheet material (2).

21. Method according to claim 20, wherein at said heating station (8) heating plates (24) are positioned at a predetermined distance from said wedge-shaped supporting means.

22. Method according to claim 19, or 20, or 21 wherein said advancing comprises advancing said portions (2) through a sealing station (10) before advancing said portions (2) to said forming station (12).

23. Method according to claim 22, wherein at said sealing station (10) there is provided sealing said portions (2) along outlines of containers to be formed, leaving in each outline an opening formed by a non-sealed region of said portions (2).

24. Method according to any one of claims 19 to 23, wherein during said sealing and during said forming there is provided keeping nozzle means (50) between said portions (2).

25. Method according to claim 24, wherein said keeping is maintained during said advancing.

26. Method according to any one of claims 19 to 25, wherein during said advancing there is provided moving said nozzle means (50) together with said portions (2) from said sealing station (10) to said forming station (12), and vice-versa.

27. Method according to any one of claims 19 to 26, and further comprising inserting said nozzle means (50) between said portions of sheet material (2) before said advancing.

28. Method according to any one of claims 19 to 27, and further comprising extracting said nozzle means (50) from said formed containers (16).

## Patentansprüche

1. Vorrichtung, mit Heizmitteln (8) zum Erhitzen eines thermoformbaren Flachmaterials (2), mit Formungsmitteln (12) zum Formen von Behältern (16) aus dem Flachmaterial (2), wobei die Heizmittel (8) keilförmige Stützmittel (18) zum Stützen des Flachmaterials (2) aufweisen, **dadurch gekennzeichnet, dass** die keilförmigen Stützmittel (18) mit Leitungsmitteln (44) versehen sind, die so angeordnet sind, dass sie ein Stützfluid gegen das Flachmaterial (2) richten.

2. Vorrichtung nach Anspruch 1, wobei die keilförmigen Stützmittel (18) seitliche nach unten divergierende Wände (20) aufweisen.

3. Vorrichtung nach Anspruch 1, wobei die Leitungsmittel (44) in einen Hohlraum (48) münden, der zu dem Flachmaterial (2) hin offen ist.

4. Vorrichtung nach einem der vorhergehenden Ansprüche, wobei die keilförmigen Stützmittel (18) an zumindest einem ihrer Enden mit Stirnwänden (36, 42) versehen sind, die nach außen konvergieren.

5. Vorrichtung nach einem der vorhergehenden Ansprüche, wobei die keilförmigen Stützmittel (18) entlang einer Vorrückrichtung F des Flachmaterials (2) angeordnet sind.

6. Vorrichtung nach einem der vorhergehenden Ansprüche, wobei die keilförmigen Stützmittel (18) an einer Heizstation (8) des Flachmaterials (2) vorgesehen sind.

7. Vorrichtung nach Anspruch 6, wobei die Heizstation (8) ein Paar Heizplatten (24) aufweist, die den keilförmigen Stützmitteln (18) zugewandt sind.

8. Vorrichtung nach Anspruch 7, wobei die Heizplatten (24) mittels Antriebsmitteln (30, 34) beweglich sind, durch die die Heizplatten (24) in einem vorbestimmten Abstand von den keilförmigen Stützmitteln (18) positioniert werden.

9. Vorrichtung nach Anspruch 6 oder 7 oder 8, weiterhin mit einer Siegelstation (10) stromabwärts der Heizstation (8), wobei die Siegelstation (10) Siegelmittel (90) zum Siegeln von Abschnitten des Flachmaterials (2) entlang von Umrisslinien von zu formenden Behältern aufweist, wobei in jeder Umrisslinie eine Öffnung belassen wird, die durch einen nicht gesiegelten Bereich des Flachmaterials (2) gebildet wird.

10. Vorrichtung nach einem der Ansprüche 6 bis 9, weiterhin mit einer Formungsstation (12) stromabwärts der Siegelstation (10).

11. Vorrichtung nach den Ansprüchen 9 und 10, wobei erste Düsenmittel (48a, 50) und zweite Düsenmittel (48b, 50) an der Siegelstation (10) und der Formungsstation (12) vorgesehen sind, wobei die Düsenmittel (48a, 50; 48b, 50) von der Siegelstation (10) zu der Formungsstation (12), und umgekehrt, beweglich sind.

12. Vorrichtung nach Anspruch 11, wobei die Düsenmittel (50) mit Einspritzmitteln (68, 72, 72) zum Einspritzen eines Formungsfluides zwischen die Abschnitte des Flachmaterials (2) versehen sind.

13. Vorrichtung nach Anspruch 11 oder 12, wobei die ersten Düsenmittel (48a, 50) und die zweiten Düsenmittel (48b, 50) mit in Längsrichtung beweglichen Bewegungsmitteln (56, 80) in Verbindung stehen, die sich entlang der Vorrückrichtung F erstrecken.

14. Vorrichtung nach Anspruch 13, wobei die in Längsrichtung beweglichen Bewegungsmittel (56, 80) gegenüberliegende Stränge von Riemenmitteln (80) aufweisen.

15. Vorrichtung nach einem der Ansprüche 11 bis 14 wobei die ersten Düsenmittel (48a, 50) und die zweiten Düsenmittel (48b, 50) mit in Querrichtung beweglichen Bewegungsmitteln (52) in Verbindung stehen, die sich quer zu der Vorrückrichtung F erstrecken.

16. Vorrichtung nach Anspruch 15, soweit dieser von Anspruch 13 oder 14 abhängig ist, wobei die in Querrichtung beweglichen Bewegungsmittel (52) auf beweglichen Rahmen (56) angeordnet sind, die Teil der in Längsrichtung beweglichen Bewegungsmittel (56, 80) sind.

17. Verfahren, mit den Schritten: Erhitzen eines thermoformbaren Flachmaterials (2), Formen von Behältern aus dem Flachmaterial nach dem Erhitzen des Flachmaterials, wobei während des Erhitzens vorgesehen ist, das Flachmaterial (2) auf keilförmigen Stützmitteln (18) zu stützen, **dadurch gekennzeichnet, dass** das Stützen das Injizieren von Stützfluidmitteln durch in den keilförmigen Stützmitteln vorgesehene Leitungsmittel (44) umfasst, die sich zu dem Flachmaterial (2) hin öffnen.

18. Verfahren nach Anspruch 17, wobei das Stützen ein Anordnen von Abschnitten des Flachmaterials (2) entlang Wänden 20 der keilförmigen Stützmittel 18 umfasst.

19. Verfahren nach Anspruch 18, wobei während des Stützens ein Vorrücken des Flachmaterials (2) entlang einer Vorrückrichtung F zu einer Formungsstation (12) zum Formen von Behältern (16) aus dem Flachmaterial (2) durch Injizieren der Formungsfluidmittel zwischen die Abschnitte (2) vorgesehen ist.

20. Verfahren nach einem der Ansprüche 17 bis 19, wobei das Stützen an einer Heizstation (8) des Flachmaterials (2) erfolgt.

21. Verfahren nach Anspruch 20, wobei an der Heizstation (8) Heizplatten (24) in einem vorbestimmten Abstand von den keilförmigen Stützmitteln positioniert werden.

22. Verfahren nach Anspruch 19 oder 20 oder 21, wobei das Vorrücken ein Vorrücken der Abschnitte (2) durch eine Siegelstation (10) vor dem Vorrücken der Abschnitte (2) zu der Formungsstation (12) umfasst.

23. Verfahren nach Anspruch 22, wobei an der Siegelstation (10) ein Siegeln der Abschnitte (2) entlang von Umrisslinien von zu formenden Behältern vorgesehen ist, wobei in jeder Umrisslinie eine Öffnung belassen wird, die durch einen nicht gesiegelten Bereich der Abschnitte (2) gebildet wird.

24. Verfahren nach einem der Ansprüche 19 bis 23, wobei während des Siegelns und während des Formens ein Halten von Düsenmitteln (50) zwischen die Abschnitte (2) vorgesehen ist.

25. Verfahren nach Anspruch 24, wobei das Halten während des Vorrückens aufrecht erhalten wird.

26. Verfahren nach einem der Ansprüche 19 bis 25, wobei während des Vorrückens ein Bewegen der Düsenmittel (50) zusammen mit den Abschnitten (2) von der Siegelstation (10) zu der Formungsstation (12), und umgekehrt, vorgesehen ist.

27. Verfahren nach einem der Ansprüche 19 bis 26, wobei es weiterhin ein Einsetzen der Düsenmittel (50) zwischen die Abschnitte des Flachmaterials (2) vor dem Vorrücken umfasst.

28. Verfahren nach einem der Ansprüche 19 bis 27, wobei es weiterhin ein Herausziehen der Düsenmittel (50) aus den gebildeten Behältern (16) umfasst.

## Revendications

1. Dispositif comprenant des moyens de chauffage (8) pour chauffer un matériau thermoformable (2) en feuille, des moyens de formage (12) pour former des récipients (16) à partir dudit matériau (2) en feuille, lesdits moyens de chauffage (8) comprenant un moyen de support (18) en forme de coin pour supporter ledit matériau (2) en feuille, ***caractérisé en ce que*** ledit moyen de support (18) en forme de coin est muni de moyens de conduit (44) disposés de manière à diriger un fluide de support vers ledit matériau (2) en feuille.

2. Dispositif selon la revendication 1, dans lequel ledit moyen de support (18) en forme de coin comprend des parois latérales (20) qui divergent vers le bas.

3. Dispositif selon la revendication 1, dans lequel lesdits moyens de conduit (44) débouchent dans une cavité (48) ouverte vers ledit matériau (2) en feuille.

4. Dispositif selon l'une quelconque des revendications précédentes, dans lequel ledit moyen de support (18) en forme de coin est muni, au moins à l'une de ses extrémités, de parois d'extrémité (36, 42) qui convergent vers l'extérieur.

5. Dispositif selon l'une quelconque des revendications précédentes, dans lequel ledit moyen de support (18) en forme de coin est disposé le long d'une direction (F) de défilement du matériau (2) en feuille.

6. Dispositif selon l'une quelconque des revendications précédentes, dans lequel ledit moyen de support (18) en forme de coin est prévu dans un poste de chauffage (8) dudit matériau (2) en feuille.

7. Dispositif selon la revendication 6, dans lequel ledit poste de chauffage (8) comprend une paire de plaques chauffantes (24) faisant face audit moyen de support (18) en forme de coin.

8. Dispositif selon la revendication 7, dans lequel lesdites plaques chauffantes (24) sont déplaçables par des moyens d'entraînement (30, 34) grâce auxquels lesdites plaques chauffantes (24) sont positionnées à une distance prédéterminée dudit moyen de support (18) en forme de coin.

9. Dispositif selon la revendication 6, 7 ou 8, et comprenant de plus un poste de soudage (10) en aval dudit poste de chauffage (8), ledit poste de soudage (10) comprenant des moyens de soudage (90) pour souder des portions dudit matériau (2) en feuille le long de contours des récipients à former, en laissant dans chaque contour une ouverture formée par une zone non soudée dudit matériau (2) en feuille.

10. Dispositif selon l'une quelconque des revendications 6 à 9, et comprenant de plus un poste de formage (12) en aval dudit poste de soudage (10).

11. Dispositif selon les revendications 9 et 10, dans lequel des premiers moyens de buse (48a, 50) et des seconds moyens de buse (48b, 50) sont prévus audit poste de soudage (10) et audit poste de formage (12), lesdits moyens de buse (48a, 50 ; 48b, 50) étant déplaçables dudit poste de soudage (10) audit poste de formage (12), et vice-versa.

12. Dispositif selon la revendication 11, dans lequel lesdits moyens de buse (50) sont munis de moyens d'injection (68, 70, 72) pour injecter un fluide de formage entre lesdites portions de matériau (2) en feuille.

13. Dispositif selon la revendication 11 ou 12, dans lequel lesdits premiers moyens de buse (48a, 50) et lesdits seconds moyens de buse (48b, 50) sont associés à des moyens mobiles longitudinalement (56, 80) s'étendant le long de ladite direction de défilement (F).

14. Dispositif selon la revendication 13, dans lequel lesdits moyens mobiles longitudinalement (56, 80) comprennent des longueurs opposées de moyens de courroie (80).

15. Dispositif selon l'une quelconque des revendications 11 à 14, dans lequel lesdits premiers moyens de buse (48a, 50) et lesdits seconds moyens de buse (48b, 50) sont associés à des moyens mobiles transversalement (52) s'étendant transversalement à ladite direction de défilement (F).

16. Dispositif selon la revendication 15 lorsqu'elle est dépendante de la revendication 13 ou 14, dans lequel lesdits moyens mobiles transversalement (52) sont placés sur des cadres déplaçables (56) qui font partie desdits moyens mobiles longitudinalement (56, 80).

17. Procédé comprenant le chauffage d'un matériau thermoformable (2) en feuille, le formage de récipients à partir dudit matériau en feuille après le chauffage dudit matériau en feuille, dans lequel, pendant ledit chauffage, il est prévu le support dudit matériau (2) en feuille sur un moyen de support (18) en forme de coin, ***caractérisé en ce que*** ledit support comprend l'injection de moyens de fluide de support à travers des moyens de conduit (44) ménagés dans ledit moyen de support en forme de coin, s'ouvrant en direction dudit matériau (2) en feuille.

18. Procédé selon la revendication 17, dans lequel ledit support comprend l'ordonnancement de portions dudit matériau (2) en feuille le long de parois (20) dudit moyen de support (18) en forme de coin.

19. Procédé selon la revendication 18, dans lequel, pendant ledit support, il est assuré le défilement dudit matériau (2) en feuille le long d'une direction de défilement (F) vers un poste de formage (12) pour former des récipients (16) à partir dudit matériau (2) en feuille par injection dudit moyen de fluide de formage entre lesdites portions (2).

20. Procédé selon l'une quelconque des revendications 17 à 19, dans lequel ledit support se fait au poste de chauffage (8) dudit matériau (2) en feuille.

21. Procédé selon la revendication 20, dans lequel, audit poste de chauffage (8), des plaques chauffantes (24) sont positionnées à distance prédéterminée dudit moyen de support en forme de coin.

22. Procédé selon la revendication 19, ou 20, ou 21, dans lequel ledit défilement comprend le défilement desdites portions (2) dans un poste de soudage (10) avant le défilement desdites portions (2) vers ledit poste de formage (12).

23. Procédé selon la revendication 22, dans lequel audit poste de soudage (10), il est assuré le soudage desdites portions (2) le long des contours des récipients à former, en laissant dans chaque contour une ouverture formée par une zone non soudée desdites portions (2).

24. Procédé selon l'une quelconque des revendications 19 à 23, dans lequel pendant ledit soudage et pendant ledit formage, il est assuré le maintien de moyens de buse (50) entre lesdites portions (2).

25. Procédé selon la revendication 24, dans lequel ledit maintien se fait pendant ledit défilement.

26. Procédé selon l'une quelconque des revendications 19 à 25, dans lequel, pendant ledit défilement, il est assuré le déplacement desdits moyens de buse (50) conjointement auxdites portions (2), dudit poste de soudage (10) audit poste de formage (12), et vice versa.

27. Procédé selon l'une quelconque des revendications 19 à 26, et comprenant de plus l'insertion desdits moyens de buse (50) entre lesdites portions de matériau (2) en feuille avant ledit défilement.

28. Procédé selon l'une quelconque des revendications 19 à 27, et comprenant de plus l'extraction desdits moyens de buse (50) desdits récipients formés (16).
